# EUROPEAN PATENT SPECIFICATION

(11) **EP 2 309 836 B1**
(45) Date of publication and mention of the grant of the patent: **07.03.2012**
(21) Application number: 09772342.3
(22) Date of filing: 23.06.2009
(51) Int. Cl.: A01B 71/08, F16P 1/02, F16D 3/84

(54) **POWER TAKE-OFF SHAFT GUARDS**
NEBENANTRIEBSWELLENSCHUTZ
PROTECTIONS D'ARBRE DE PRISE DE FORCE

(30) Priority: 01.07.2008 GB 0811909
(43) Date of publication of application: 20.04.2011
(73) Proprietor: AGCO GmbH, 87616 Marktoberdorf (DE)
(72) Inventor: WOLFLE, Gottlieb, 87616 Marktoberdorf (DE)
(74) Representative: Morrall, Roger
(86) International application number: PCT/EP2009/057782
(87) International publication number: WO 2010/000642

(56) References cited:
- DE-A1- 10 222 005
- GB-A- 2 005 801
- US-A- 4 553 950
- US-A- 4 840 604

## Description

This invention relates to guards for Power Take-Off (PTO) shafts used on tractors or similar vehicles.

It is known to have PTO guards which can be moved between an extended position in which the guard provides protection from injury from an associated PTO shaft and a retracted position when such protection is not required such a guard is known from US 4 553 950. It is also known to have removeable PTO guards which are detached when the protection is not required but these moveable guards impose a storage problem.

It is an object of the present invention to provide an improved form of PTO guard.

Thus according to the present invention there is provided a PTO shaft guard arrangement in which a guard member is of inverted U-shaped form and is pivotally mounted on a support structure the arrangement being characterised in that the support structure comprises a pair of generally vertically extending plates located on opposite sides of the associated PTO shaft between which the guard member is pivotally mounted for movement between a non-operative retracted position and an operative extended position, the guard member having an over-centre spring means for holding the guard member in both the retracted and extended positions.

Such an arrangement holds the guard member in either the retracted or extended positions thus preventing rattling and can be easily pivoted between the positions by movement initially against the action of the spring means which, in the second part of such movement, is subsequently assisted by the spring means.

The support structure may comprise a pair of generally vertically extending plates located on opposite sides of the associated PTO shaft, the guard member being of inverted general U-shaped form with each side of the inverted U-shape guard pivotally mounted on a respective generally vertically extending plate.

The spring means may comprise a pair of bow springs, one end of each bow spring being mounted on the adjacent generally vertically extending plate and the other end being mounted on the adjacent support arm.

Each generally vertically extending plate may include a generally vertically extending slot, a towing hitch being vertically slidable between the plates in the slots and lockable relative to the plates at various heights.

In such an arrangement as the hitch is moved vertically into the vicinity of the PTO shaft, if the guard member is in the extended position, the hitch contacts the guard and moves the guard towards the retracted position.

Fixed side protection plates may extend between the vertically extending plates and the tractor chassis on which the vertically extending plates are mounted, each support arm moving in a slot provided in its respective side protection plate.

A fixed top protection plate may extend between the tractor chassis and an inner edge of the top of the guard member when the guard member is in its extended position.

The invention will now be described, by way of example only, with reference to the accompanying drawings in which:-
- Figures 1, 2 and 3: show side, end and plan views respectively of a PTO shaft guard arrangement in accordance with the present invention in its retracted position, and
- Figures 4, 5 and 6: show side, end and plan views respectively of the guard arrangement of Figures 1 to 3 in its extended position, and
- Figures 7, 8, 9, 10 and 11: show perspective views of PTO guards in accordance with the present invention.

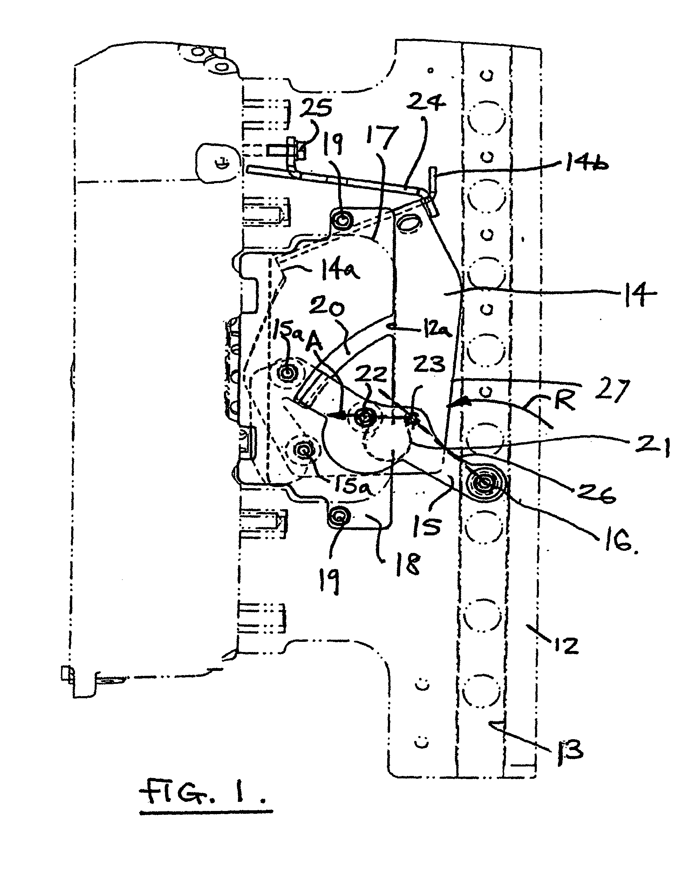

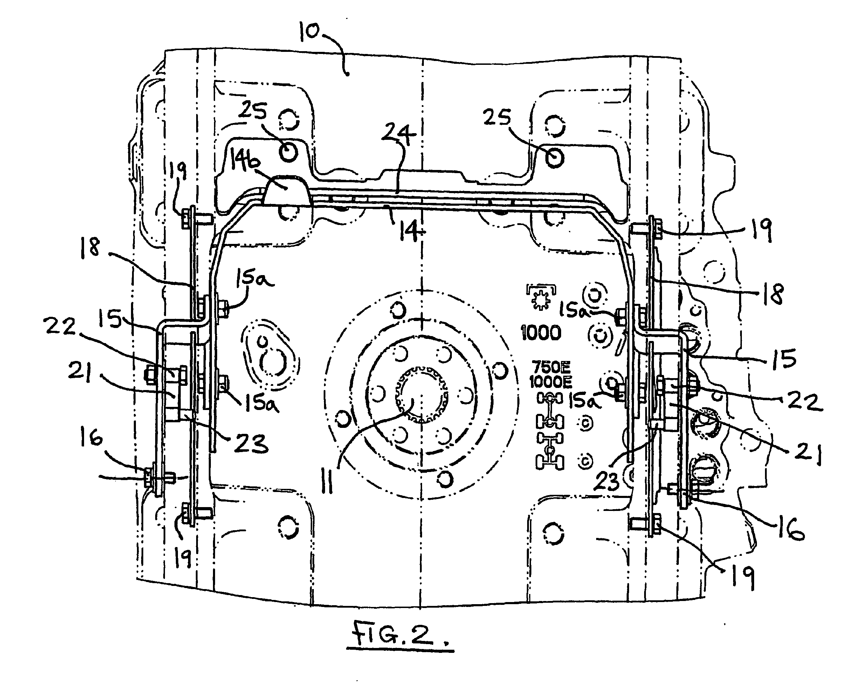

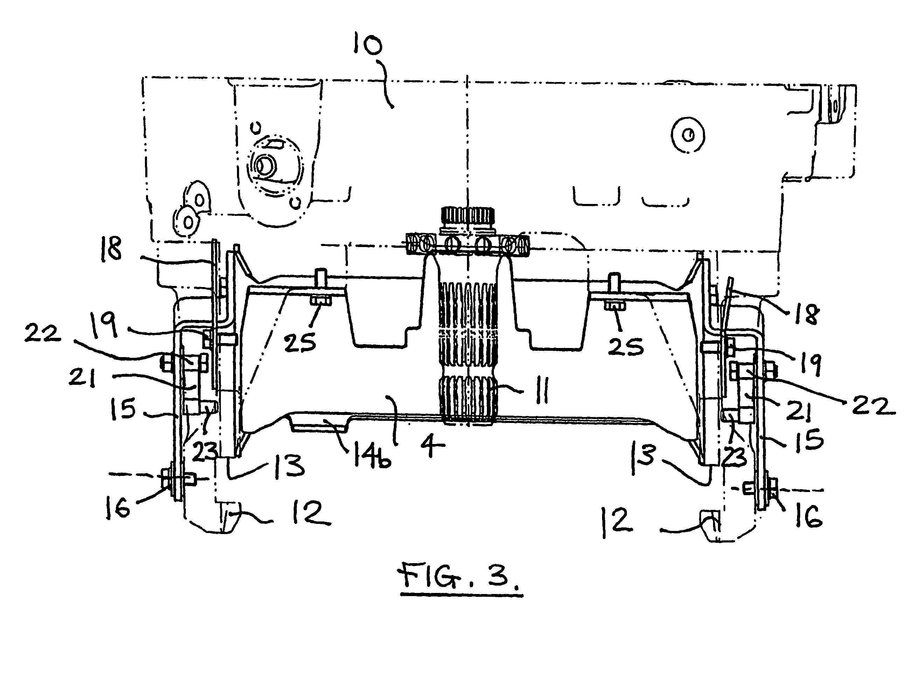

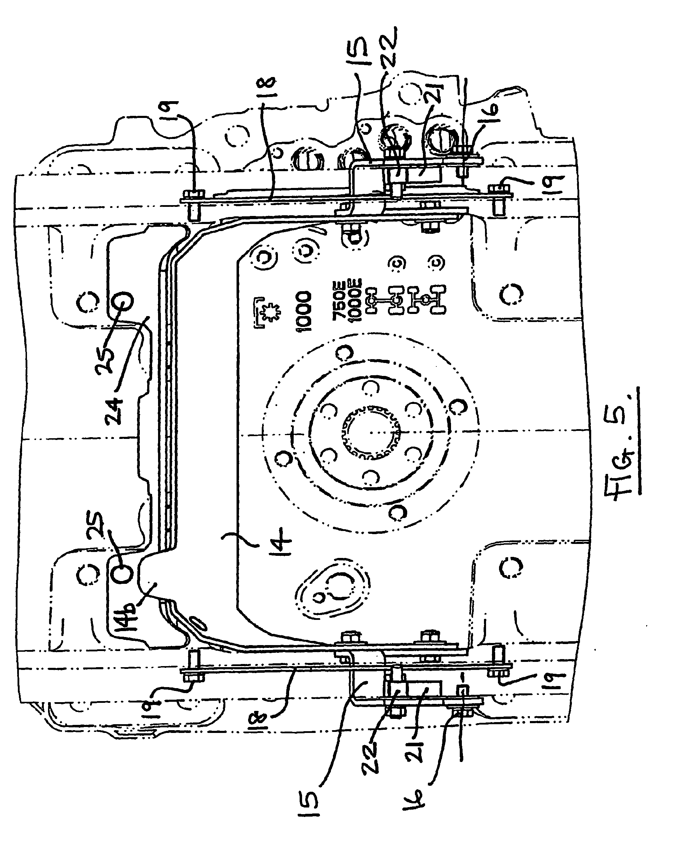

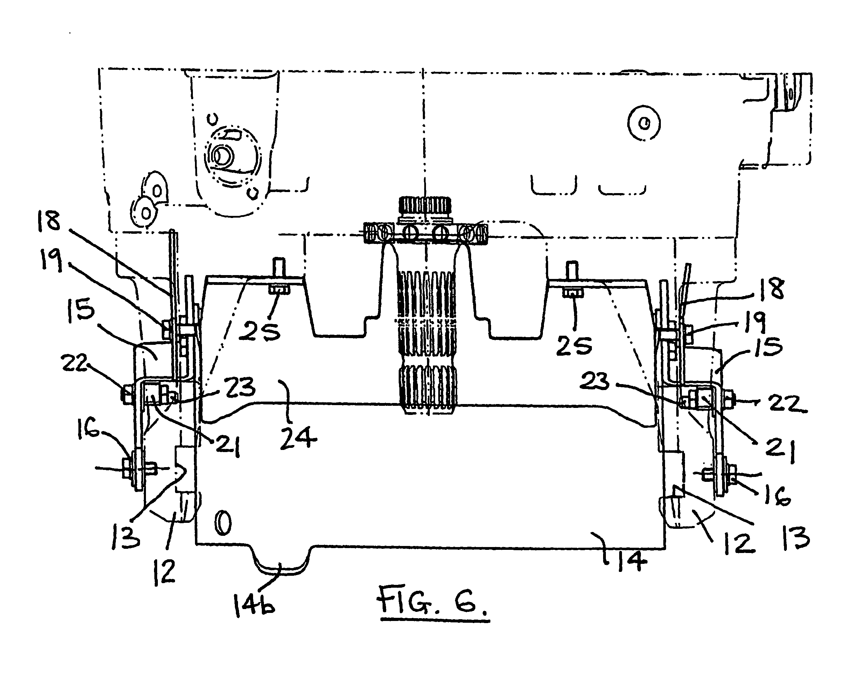

According to figures 1 to 6, the rear of a tractor chassis 10 is provided with a PTO shaft 11 which emerges from the chassis between two vertical hitch support plates 12, each provided with a vertically extending slot 13 in which a vertically moveable hitch (not shown) is slideable.

A PTO guard member 14 is pivotally mounted on the plates 12 by two arms 15 which are screwed to the guard at 15a and which pivot about pins 16 screwed into the plates 12. Each vertical plate 12 has a cut-out 17 to save weight which is covered by a side protection plate 18 secured to the adjacent vertical plate 12 by bolts 19. Each protection plate 18 has a slot 20 through which the respective support arm 15 for the PTO shaft cover 14 extends.

A bow spring 21 acts between a pin 22 on the support arm 15 and a pin 23 mounted on the adjacent vertical plate 12.

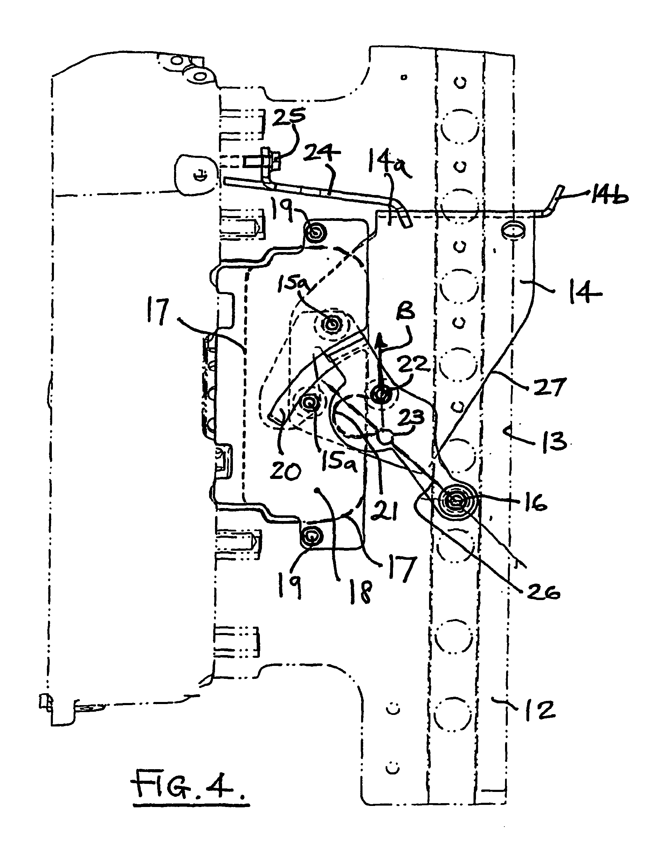

A top protection plate 24 is bolted on the rear of the chassis at 25 and extends between the edge portion 14a of the guard and the chassis when the guard is in its extended position shown in Figure 4.

With the PTO shaft guard 14 in its retracted position shown in Figure 1, the bow spring 21 applies force to the guard 14 in the direction of the arrow A resulting in a turning moment on the guard in an anti-clockwise sense as shown by the arrow R thus holding the guard in its fully retracted position shown in Figure 1. The lower end of the slot 20 in each protection plate 18 provides a stop for the downward movement of arm 15.

Figure 4 shows the PTO shaft guard in its fully extended position which the bow spring 21 applies a force B to the guard which generates a clockwise turning moment about the axis 16 thus tending to hold the guard in its fully extended position. The clockwise movement of the arm 15 is limited by the edge 12a of the plate 12.

The guard 14 has a tab 14b allowing the operator to easily grip the guard for moving the guard between its retracted and extended position. As will be appreciated, the bow springs 21 initially oppose the movement of the guard from its current retracted or extended position, but when the pins 21 cross the lines 26 between the pivots 16 and the pins 23, the spring go "over centre" and assist in moving the guard towards its new position.

As can be seen from Figure 4, the front edge of the guard 14 has cam surfaces 27 which extends across the vertical slots 13 in the vertical plates 12. If a vertically moveable hitch is mounted in the slots 12 and is moved upwardly it will contact this cam surfaces 27 and move the PTO guard towards its retracted position. Initially this movement will be opposed by the bow springs 21 but after the mounting pins 22 move "over centre" this spring force will assist in retracting the PTO guard.

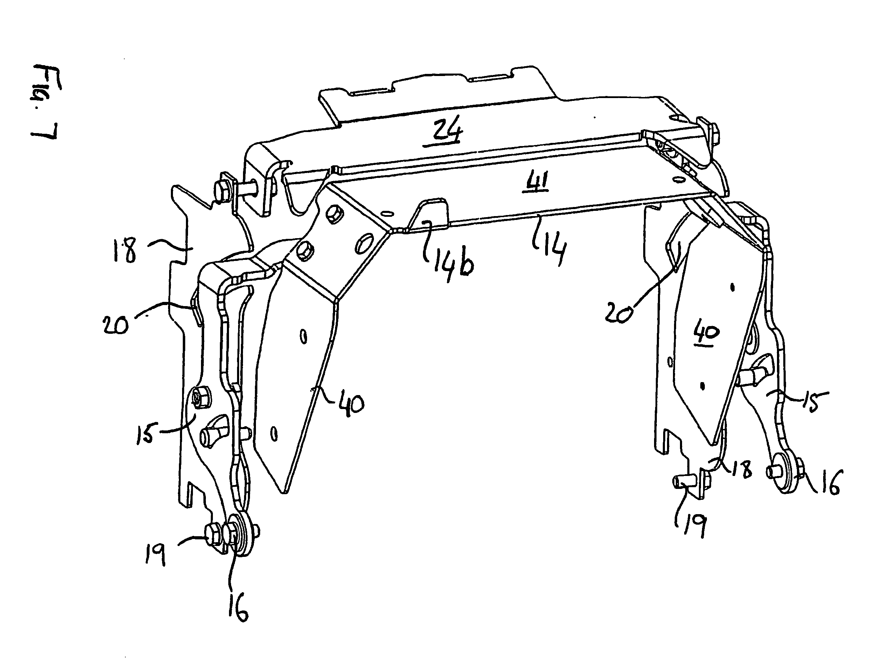

Figures 7 to 11 show different arrangements of the shaft guard 14 according to the invention. The PTO shaft and hitch support plates 12 are not shown in these drawings. All other features, where present are indicated using the same reference numbers as in figures 1 to 6.

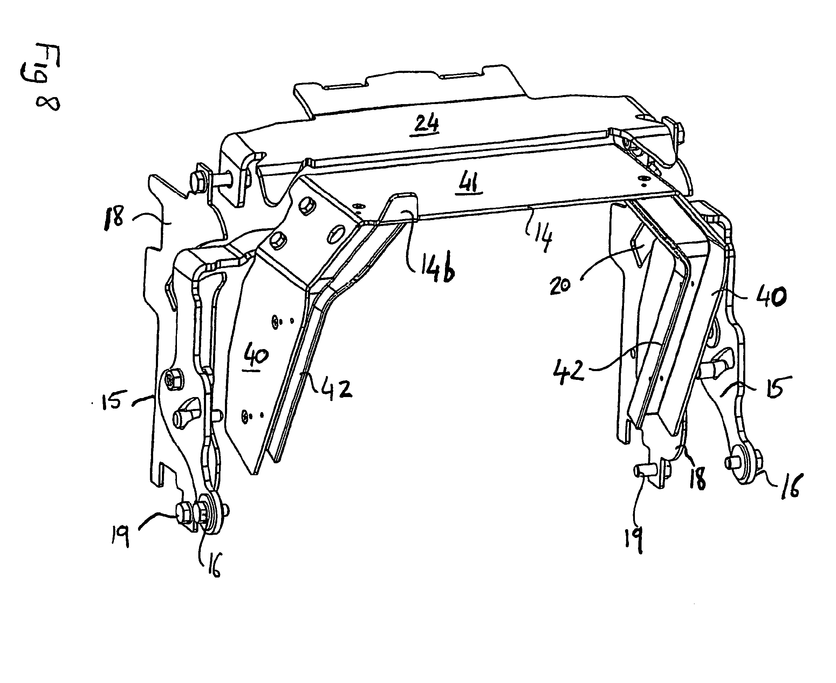

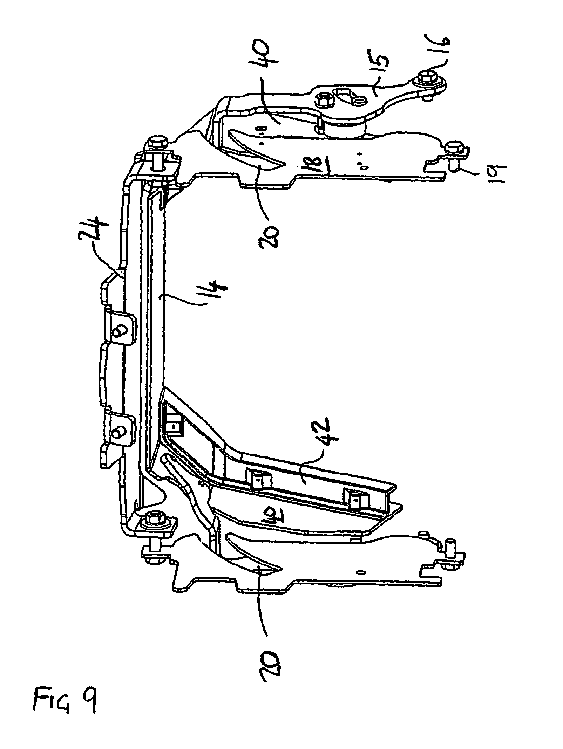

Figure 7 shows a perspective view of the guard 14 from the front as it would be viewed if attached to a vehicle having a PTO shaft. The guard 14 has two side portions 40 and a central portion 41 which form a generally flat bottomed inverted U-shape. Figure 8 shows a perspective view of the guard in which side portions 40 are fitted with releasably attachable adapter side members 42. The adapter side members 42 protrude inwards towards each other and are attached to side portions 40 by fastening means such as bolts, or screws. The attachment means can be seen in figure 9 which show a perspective view of the back of the guard of figure 8. The adapter side members decrease the distance of the side portions 40 of the guard from the PTO shaft. By fitting the adapter side members 42 greater space either side of the shaft is protected.

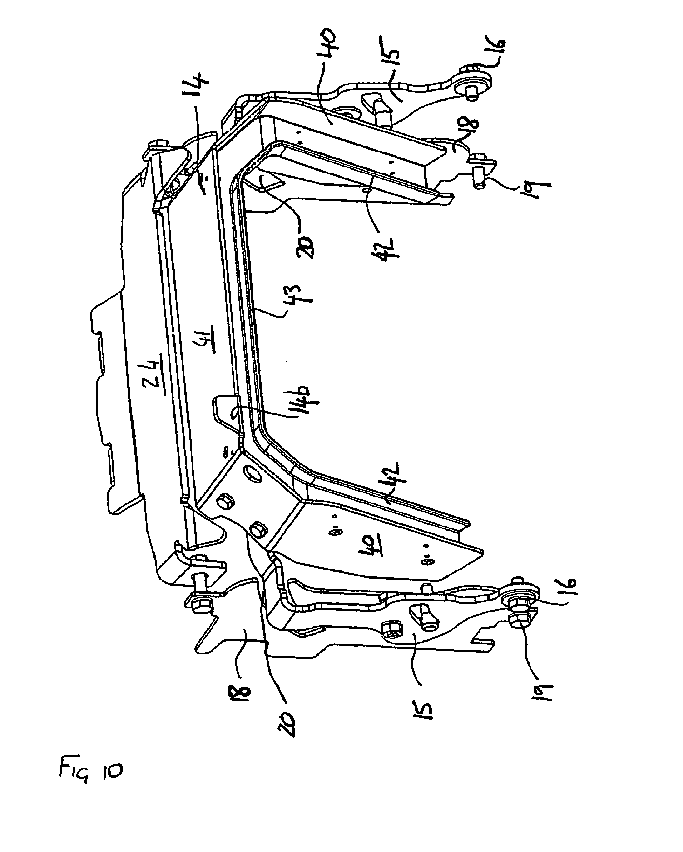

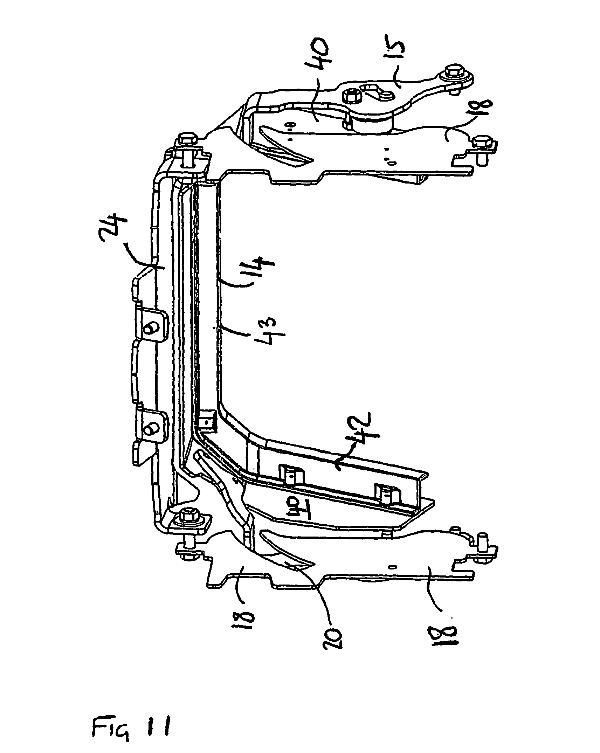

Figures 10 and 11 show front and rear perspective views of the guard 14 in which both side 40 portions and the central portion 41 of the guard 14 are provided with releasably attachable side adapter members 42 and a central portion adapter member 43. The central portion adapter member 43 protrudes downwards towards a PTO shaft (not shown) and provides greater protection of the space between the central portion 41 and the PTO shaft. The central portion adapter member 43 is attached to the guard 14, for example by bolts, or screws as can be seen from figure 11 which is a rear perspective view of figure 10. The central portion adapted 43 and side portion members 42 may be individual parts, or a single piece. The adapter side members 42 and central potion adapter member 43 alter the size of the guard which may be necessary to comply with certain rules and regulations in various countries.

## Claims

1. A PTO shaft guard arrangement in which a guard member (14) is of inverted U-shaped form and is pivotally mounted on a support structure the arrangement being **characterised in that** the support structure comprises a pair of generally vertically extending plates (12) located on opposite sides of the associated PTO shaft (11) between which the guard member (14) is pivotally mounted for movement between a non-operative retracted position and an operative extended position, the guard member having an over-centre spring means (21) for holding the guard member in both the retracted and extended positions.

2. An arrangement according to claim 1 **characterised in that** each side of the guard member (14) is mounted on its respective generally vertically extending plate (12) via a support arm (15) one end portion (16) of which is pivoted on the plate, the other end portion (15a) of the arm being connected with the respective side of the guard.

3. An arrangement according to claim 2 **characterised in that** the spring means comprises a pair of bow springs (21), one end (23) of each bow spring being mounted on the adjacent generally vertically extending plate (12) and the other end (22) being mounted on the adjacent support arm (15).

4. An arrangement according to any one of claims 1 to 3 **characterised in that** each generally vertically extending plate (12) includes a generally vertically extending slot (13), a towing hitch being vertically slidable between the plates in the slots and lockable relative to the plates at various heights.

5. An arrangement according to claim 4 **characterised in that** as the hitch is moved vertically into the vicinity of the PTO shaft (11), if the guard member (14) is in the extended position, the hitch contacts the guard and moves the guard towards the retracted position.

6. An arrangement according to any one of claims 2 to 5 in which PTO shaft fixed side protection plates (18) extend between the vertically extending plates (12) and the tractor chassis on which the vertically extending plates are mounted, each support arm (15) moving in a slot (20) provided in its respective side protection plate (18).

7. An arrangement according to claim 6 in which a fixed top protection plate (24) extends between the tractor chassis and an inner edge of the top of the guard member (14) when the guard member is in its extended position.

8. An arrangement according to any preceding claim wherein the guard member (14) is provided with at least one releasably attachable adapter member (42) which decreases the distance between the guard (14) and the PTO shaft (11).

## Patentansprüche

1. Anordnung zum Schutz einer Zapfwelle oder Leistungsabgabewelle, in der ein Schutzelement (14) eine invertierte U-Form besitzt und schwenkbar auf oder an einer Tragstruktur der Anordnung montiert ist, **dadurch gekennzeichnet, dass** die Tragstruktur ein Paar sich grundsätzlich vertikal erstreckender Platten (12) besitzt, die auf gegenüberliegenden Seiten der zugeordneten Zapfwelle oder Leistungsabgabewelle angeordnet sind und zwischen denen das Schutzelement (14) schwenkbar montiert ist mit Gewährleistung einer Bewegung zwischen einer nicht wirksamen zurückgezogenen Position und einer wirksamen erweiterten Position, wobei das Schutzelement ein Übertotpunkt-Federmittel (21) besitzt, um das Schutzelements sowohl in der zurückgezogenen als auch in der erweiterten Position zu halten.

2. Anordnung nach Anspruch 1, **dadurch gekennzeichnet, dass** jede Seite des Schutzelements (14) an der zugeordneten sich grundsätzlich vertikal erstreckenden Platte (12) über einen Tragarm (15) montiert ist, von dem ein Endbereich (16) an der Platte verschwenkt wird, während der andere Endbereich (15a) des Arms verbunden ist mit der zugeordneten Seite des Schutzelements.

3. Anordnung nach Anspruch 2, **dadurch gekennzeichnet, dass** das Federmittel ein Paar von Bogenfedern (21) aufweist, wobei ein Ende (23) von jeder Bogenfeder an der benachbarten, sich grundsätzlich vertikal erstreckenden Platte (12) montiert ist und das andere Ende (22) an dem benachbarten Tragarm (15) montiert ist.

4. Anordnung nach einem der Ansprüche 1 bis 3, **dadurch gekennzeichnet, dass** jede sich grundsätzlich vertikal erstreckende Platte (12) einen sich grundsätzlich vertikal erstreckenden Schlitz (13) aufweist, wobei eine ziehende Anbauvorrichtung oder Anhängerkupplung vertikal zwischen den Platten in den Schlitzen gleiten kann und relativ zu den Platten in unterschiedlichen Höhen verriegelbar ist.

5. Anordnung nach Anspruch 4, **dadurch gekennzeichnet, dass** bei vertikaler Bewegung der Anbauvorrichtung oder Anhängerkupplung in die Nähe der Zapfwelle oder Leistungsabgabewelle (11) die Anbauvorrichtung das Schutzelement kontaktiert, sofern das Schutzelement (14) in der erweiterten Position ist, und das Schutzelement in Richtung der zurückgezogenen Position bewegt.

6. Anordnung nach einem der Ansprüche 2 bis 5, wobei sich Seitenschutzplatten (18), die an der Zapfwelle oder Leistungsabgabewelle fixiert sind, zwischen den sich grundsätzlich vertikal erstreckenden Platten (12) und dem Chassis des Traktors oder Zugfahrzeugs, an dem die sich vertikal erstreckenden Platten montiert sind, erstrecken, wobei sich jeder Tragarm (15) in einem Schlitz (20), der in der zugeordneten Seitenschutzplatte (18) vorgesehen ist, bewegt.

7. Anordnung nach Anspruch 6, **dadurch gekennzeichnet, dass** sich eine fixierte obere Schutzplatte (24) zwischen dem Chassis des Traktors oder Zugfahrzeugs und einem inneren Rand der Oberseite des Schutzelements (14) erstreckt, wenn sich das Schutzelement in seiner erweiterten Position befindet.

8. Anordnung nach einem der vorhergehenden Ansprüche, **dadurch gekennzeichnet, dass** das Schutzelement (14) mit zumindest einem lösbar befestigbaren Adapterelement (42) ausgestattet ist, welches den Abstand zwischen dem Schutzelement (14) und der Zapfwelle oder Leistungsabgabewelle (11) verringert.

## Revendications

1. Agencement de protection d'arbre de prise de force (PTO) dans lequel un élément de protection (14) est réalisé avec une forme en U inversé et est monté de manière à pouvoir pivoter sur une structure de support, l'agencement étant **caractérisé en ce que** la structure de support comprend une paire de plaques s'étendant sensiblement verticalement (12) situées sur des côtés opposés de l'arbre de PTO associé (11) entre lesquelles l'élément de protection (14) est monté de manière à pouvoir pivoter afin de se déplacer entre une position rétractée non opérationnelle et une position étendue opérationnelle, l'élément de protection comportant un moyen élastique excentré (21) afin de maintenir l'élément de protection à la fois dans les positions rétractée et étendue.

2. Agencement selon la revendication 1 **caractérisé en ce que** chaque côté de l'élément de protection (14) est monté sur sa plaque s'étendant sensiblement verticalement (12) respective par l'intermédiaire d'un bras de support (15) dont une première partie d'extrémité (16) peut pivoter sur la plaque, l'autre partie d'extrémité (15a) du bras étant reliée au côté respectif de la protection.

3. Agencement selon la revendication 2, **caractérisé en ce que** le moyen élastique comprend une paire de ressorts courbés (21), la première extrémité (23) de chaque ressort courbé étant montée sur la plaque s'étendant sensiblement verticalement adjacente (12) et l'autre l'extrémité (22) étant montée sur le bras de support adjacent (15).

4. Agencement selon l'une quelconque des revendications 1 à 3 **caractérisé en ce que** chaque plaque s'étendant sensiblement verticalement (12) comporte une fente s'étendant sensiblement verticalement (13), un crochet d'attelage pouvant coulisser verticalement entre les plaques sur les fentes et être verrouillé par rapport aux plaques à différentes hauteurs.

5. Agencement selon la revendication 4, **caractérisé en ce que**, lorsque le crochet d'attelage est déplacé verticalement à proximité de l'arbre de PTO (11), si l'élément de protection (14) est dans la position étendue, le crochet d'attelage vient en contact avec la protection et déplace la protection vers la position rétractée.

6. Agencement selon l'une quelconque des revendications 2 à 5, dans lequel des plaques de protection latérales (18) fixées sur l'arbre de PTO s'étendent entre les plaques s'étendant sensiblement verticalement (12) et le châssis de tracteur sur lequel les plaques s'étendant verticalement sont montées, chaque bras de support (15) se déplaçant dans une fente (20) formée sur sa plaque de protection latérale (18) respective.

7. Agencement selon la revendication 6, dans lequel une plaque de protection supérieure fixe (24) s'étend entre le châssis de tracteur et un bord interne de la partie supérieure de l'élément de protection (14) lorsque l'élément de protection est dans sa position étendue.

8. Agencement selon l'une quelconque des revendications précédentes dans lequel l'élément de protection (14) comporte au moins un élément d'adaptation pouvant être fixé de manière amovible (42) qui diminue la distance entre la protection (14) et l'arbre de PTO (11).
